# EUROPEAN PATENT APPLICATION

(11) **EP 0 951 183 A2**
(43) Date of publication of application: **20.10.1999**
(21) Application number: 98112893.7
(22) Date of filing: 10.07.1998
(51) Int. Cl.: H04N 7/26

(54) **Electronic watermark processing apparatus**

(30) Priority: 17.04.1998 JP 10803998; 01.05.1998 JP 12210898
(71) Applicant: Digital Vision Laboratories Corporation, Minato-ku, Tokyo (JP)
(72) Inventor: Muratani, Hirofumi, Kawasaki-shi (JP)
(74) Representative: Lins, Edgar, Dipl.-Phys. Dr.jur.

(57) **Abstract**

Information representing whether a user is included in arbitrary two of all users who may receive digital data is embedded in the digital data. Even when a plurality of users collude to alter the difference data to data of a third party other than themselves, the data representing themselves remains in the altered data, so collusion fails. An electronic watermark processing apparatus embeds watermark such that the watermark can hardly be altered even when a plurality of users collude to compare their data.

## Description

The present invention relates to an electronic watermark processing apparatus for embedding and hiding, into a digital work such as audio or image data, certain information called watermark or fingerprint (to be referred to as watermark hereinafter) associated with the copyright owner of the digital work or user of the digital data without making the watermark perceptible to the copyright owner or user.

With an advance in digital technology, various works such as movies, music, and photographs are being distributed as digital data (digital works). Under this circumstance, a serious problem is posed in association with copyrights of digital works. In recent years, an electronic watermark technology has received a great deal of attention as a technique of preventing illicit use of digital works. This technique is used to protect the right of a copyright owner or provider of data. Watermark associated with the copyright owner, the provider, or a user is embedded into the data without making the watermark recognizable to the user. If the data is illicitly used, the user can be specified.

Prevention of illicit use will be described in more detail. Before distribution of a digital work, the copyright owner embeds watermark for identifying the user. The user may copy the digital work without permission of the copyright owner and sell the copy to a third party. Upon finding a copy which is suspected of illicit copying, the copyright owner can detect the watermark from the data to specify the user who has copied it without permission and illicitly sold the copy, and impose a penalty on the user. Since the user cannot know the type of watermark or the embedding position thereof in the digital data, he/she cannot remove the watermark.

However, if the watermark is including information for identifying the user and is different for every user, the presence of the watermark can be easily known when two or more users collude. More specifically, when a user "A" and a user "B" calculate the difference between the two data, the embedding position can be estimated, though the watermark of the user "A" and that of the user "B" cannot be identified. For this reason, the users can alter the watermark by adding a certain signal to this difference data.

For example, watermark information as 2-bit digital data for identifying each of three users "A", "B", and "C" is embedded into digital data of an MPEG moving image. The ID mark of the user "A" is "10", that of the user "B" is "01", and that of the user "C" is "11". The ID mark "00" does not identify any users. To embed the 2-bit ID mark, the first bit is embedded into the luminance data of a pixel (x, y) of an i-th frame. When the first bit data is "1", luminance data V is set to be V + 1. When the first bit data is "0", the luminance data V is not changed. The second bit data is embedded into the luminance data of a pixel (v, w) of a j-th frame. When the second bit data is "1", luminance data V' is set to be V' + 1. When the first bit data is "0", the luminance data V' is not changed.

The user can be specified by checking the luminance data of the pixel (x, y) of the i-th frame and that of the pixel (v, w) of the j-th frame. The ID mark "10" of the user "A" is (V + 1, V'), and the ID mark "01" of the user "B" is (V, V' + 1).

By comparing the data, the users "A" and "B" can detect the differences between luminance data of the pixel (x, y) of the i-th frame and that of the pixel (v, w) of the j-th frame, i.e., can know that the watermark for identifying the users is embedded into these data. These luminance data can be rewritten to alter the identification information such that it represents another user.
(i; x, y) : (V + 1, or V) → V + ΔV

This means that the luminance data V + 1 or V of the pixel (x, y) of the i-th frame is rewritten to V + ΔV.
(j; v, w) : (V', or V' + 1) → V' + ΔV'

This means that the luminance data V' or V' + 1 of the pixel (v, w) of the j-th frame is rewritten to V' + ΔV'.

How to select ΔV and ΔV' will be considered.
(a) ΔV = 1, ΔV' = 0
   This is the same as the ID mark of the user "A".
(b) ΔV = 0, ΔV' = 1
   This is the same as the ID mark of the user "B".
(c) ΔV = 1, ΔV' = 1
   This is the ID mark of the user "C".
(d) ΔV = 0, ΔV' = 0
   This ID mark is not defined and therefore specifies nobody.

For the users "A" and "B", ΔV and ΔV' need be rewritten to data other than (a) and (b) because the identification information (a) and (b) represent the users "A" and "B" themselves, respectively. Although the users "A" and "B" do not recognize the specific meaning of the rewritten identification information (c) and (d), they can estimate that this rewrite allows to alter the identification information representing themselves.

The watermark embedding processing described above is a merely example, and watermark can be embedded into digital data in a variety of manners as more general transformation.

As described above, the conventional electronic watermark embedding technique allows to embed and hide watermark for identifying a user without making the watermark perceptible to the user. However, when a plurality of users collude and compare their data, information associated with the position where the watermark is embedded can be obtained. This undesirably facilitates forgery or erasure of the watermark.

Accordingly, it is an object of the present invention to provide an electronic watermark processing apparatus for embedding and hiding watermark associated with a user of digital data into the data such that even when a plurality of users collude and compare their data, information associated with the embedded watermark cannot be sufficiently obtained to result in a difficulty in forgery or erasure of the watermark.

According to the present invention, there is provided an electronic watermark processing apparatus for embedding information for identifying a user into digital data to be distributed to the user without making the information perceptible to the user, wherein information representing whether the user is included in arbitrary two of all users who may receive the digital data is used as the information for identifying the user.

According to the present invention, there is provided another electronic watermark processing apparatus for embedding information for identifying a user into digital data to be distributed to the user without making the information perceptible to the user, wherein information representing whether the user is one of users who may receive the digital data is used as the information for identifying the user.

According to the present invention, there is provided a still another electronic watermark processing apparatus for embedding information for identifying a user into digital data to be distributed to the user without making the information perceptible to the user, wherein an order is set for users who may receive the digital data, and information representing whether an ordinal number of the user is smaller than, equal to, or larger than that of one of the users is used as the information for identifying the user.

According to the present invention, there is provided a still further electronic watermark processing apparatus for embedding information for identifying a user into digital data to be distributed to the user without making the information perceptible to the user, wherein an order is set for users who may receive the digital data, and letting N be the total number of users who may receive the digital data, relatively prime numbers p and q for satisfying N ≦ p × q are obtained, and information representing whether a remainder of an order n of the user to modulus p is smaller than, equal to, or larger than each of 0 to p-1 and information representing whether a remainder of the order n of the user to modulus q is smaller than, equal to, or larger than each of 0 to q-1 are used as the information for identifying the user.

According to the present invention, there is provided an identification information generation apparatus for generating identification information to be added to digital data to be distributed to a user without making the information perceptible to the user, wherein information representing whether an object to be identified is included in arbitrary two of all identification objects is generated as the information for identifying the object.

According to the present invention, there is provided another identification information generation apparatus for generating identification information to be added to digital data to be distributed to a user without making the information perceptible to the user, wherein information representing whether an object to be identified is one of all identification objects is generated as the information for identifying the object.

According to the present invention, there is provided a still another identification information generation apparatus for generating identification information to be added to digital data to be distributed to a user without making the information perceptible to the user, wherein an order is set for identification objects, and information representing whether an ordinal number of an object to be identified is smaller than, equal to, or larger than that of one of the identification objects is generated as the information for identifying the object.

According to the present invention, there is provided an ID mark processing apparatus comprising:
a syntax analyzer for syntax-analyzing digital data and outputting information associated with a token representing a certain meaning of a set of data;
a data transformation assignor storing various data transformation contents, the data transformation assignor outputting the data transformation contents corresponding to the token;
means for generating an ID mark in accordance with information unique to an identification object; and
ID mark embedding means for changing a predetermined portion of the digital data in accordance with the ID mark and the data transformation contents output from the data transformation assignor.

According to the present invention, there is provided another ID mark processing apparatus comprising:
a syntax analyzer for syntax-analyzing digital data and outputting information associated with a token representing a certain meaning of a set of data;
a data transformation assignor storing various data transformation contents together with a cost representing the degree of change in data by data transformation, the data transformation assignor outputting the data transformation contents corresponding to the token;
means for accumulating the degree of change in data after transformation;
means for generating an ID mark in accordance with information unique to an identification object;
ID mark embedding means for changing a predetermined portion of the digital data in accordance with the ID mark and the data transformation contents output from the data transformation assignor; and
means for inhibiting an operation of the ID mark embedding means when an accumulation value of the degree of change in data, which is accumulated in the accumulation means, exceeds a predetermined value.

According to the present invention, there is provided an identification information detection apparatus for reading identification information from digital data in which the identification information is embedded without making the information perceptible to a user, comprising:
means for extracting an ID mark embedded at a predetermined position of the digital data; and
means for decoding the extracted ID mark to obtain the identification information.

According to the present invention, there is provided an identification information reading method of reading identification information for identifying a user from digital data in which the information is embedded by an electronic watermark processing apparatus for embedding information for identifying a user into digital data to be distributed to the user without making the information perceptible to the user and wherein information representing whether the user is included in arbitrary two of all users who may receive the digital data is used as the information for identifying the user, comprising the steps of:
reading a portion corresponding to each user pair from the identification information extracted from the digital data; and
determining whether the portion has a mark embedded by the electronic watermark processing apparatus and representing that the user pair includes a user corresponding to the digital data, or another mark,
wherein a user pair for which it is determined that the portion has the mark embedded by the electronic watermark processing apparatus and representing that the user pair includes the user corresponding to the digital data is estimated as a candidate pair of colluding users.

According to the present invention, there is provided another identification information reading method of reading identification information for identifying a user from digital data in which the information is embedded by an electronic watermark processing apparatus for embedding information for identifying a user into digital data to be distributed to the user without making the information perceptible to the user, wherein information representing whether the user is one of users who may receive the digital data is used as the information for identifying the user, comprising the steps of:
reading a portion corresponding to each user from the identification information extracted from the digital data; and
determining whether the portion has a mark embedded by the electronic watermark processing apparatus and representing that the user is a user corresponding to the digital data, or another mark,
wherein a user for which it is determined that the portion has the mark embedded by the electronic watermark processing apparatus and representing that the user is the user corresponding to the digital data is estimated as a candidate of a colluding user.

According to the present invention, there is provided a still another identification information reading method of reading identification information for identifying a user from digital data in which the information is embedded by an electronic watermark processing apparatus for embedding information for identifying a user into digital data to be distributed to the user without making the information perceptible to the user, wherein an order is set for users who may receive the digital data, and information representing whether an ordinal number of the user is smaller than, equal to, or larger than that of one of the users is used as the information for identifying the user, comprising the steps of:
1) sequentially reading a portion corresponding to each user from the identification information extracted from the digital data;
2) determining whether the portion has a mark embedded by the electronic watermark processing apparatus and representing that an ordinal number of the user is smaller than that of a user corresponding to the digital data or another data, and repeating the steps 1) and 2) until another mark is detected;
3) sequentially reading a portion corresponding to each user from a portion next to another mark which has been detected for the first time in the step 2);
4) determining whether the portion has a mark embedded by the electronic watermark processing apparatus and representing that the ordinal number of the user is larger than that of the user corresponding to the digital data or another data, and repeating the steps 3) and 4) until another mark is detected; and
5) repeating the steps 3), 4), and 5) until a final bit of the extracted identification information is reached,
   wherein the step 2) comprises estimating, as a first colluding user candidate, the user corresponding to the portion having another mark detected for the first time, and
the step 4) comprises estimating, as a second colluding user candidate, the user corresponding to the portion having another mark finally detected.

According to the present invention, there is provided a still further identification information reading method of reading identification information for identifying a user from digital data in which the information is embedded by an electronic watermark processing apparatus for embedding information for identifying a user into digital data to be distributed to the user without making the information perceptible to the user, wherein an order is set for users who may receive the digital data, and letting N be the total number of users who may receive the digital data, relatively prime numbers p and q for satisfying N ≦ p× q are obtained, and information representing whether a remainder of an order n of the user to modulus p is smaller than, equal to, or larger than each of 0 to p-1 and information representing whether a remainder of the order n of the user to modulus q is smaller than, equal to, or larger than each of 0 to q-1 are used as the information for identifying the user, comprising the steps of:
1) sequentially reading a portion corresponding to each user to modulus p from the identification information extracted from the digital data;
2) determining whether the portion has a mark embedded by the electronic watermark processing apparatus and representing that a remainder of an order of the user to modulus p is smaller than a remainder of an order of a user corresponding to the digital data to modulus p or another mark, and repeating the steps 1) and 2) until another mark is detected;
3) sequentially reading a portion corresponding to the remainder of the order of each user to modulus p from a portion next to another mark which has been detected for the first time in the step 2);
4) determining whether the portion has a mark embedded by the electronic watermark processing apparatus and representing that the remainder of the order of the user to modulus p is larger than the remainder of the order of the user corresponding to the digital data to modulus p or another mark, and repeating the steps 3) and 4) until another mark is detected;
5) repeating the steps 3), 4), and 5) until all portions of orders of users to modulus p are read from the extracted identification information;
6) after all portions of the remainders of the orders of the users to modulus p are read from the extracted identification information in the step 5), sequentially reading, from the next portion, a portion corresponding to the remainder of the order of each user to modulus q;
7) determining whether the portion has a mark embedded by the electronic watermark processing apparatus and representing that a remainder of the order of the user to modulus q is smaller than the remainder of the order of the user corresponding to the digital data to modulus q or another mark, and repeating the steps 6) and 7) until another mark is detected;
8) sequentially reading a portion corresponding to the remainder of the order of each user to modulus q from a portion next to another mark which has been detected for the first time in the step 7);
9) determining whether the portion has a mark embedded by the electronic watermark processing apparatus and representing that the remainder of the order of the user to modulus q is larger than the remainder of the order of the user corresponding to the digital data to modulus q or another mark, and repeating the steps 8) and 9) until another mark is detected; and
10) repeating the steps 8), 9), and 10) until all portions of orders of the users to modulus q are read from the extracted identification information,
   wherein a Chinese remainder theorem is applied to a set of the remainder of the order of the user to modulus p corresponding to the portion having another mark detected for the first time in the step 2), the remainder of the order of the user to modulus p corresponding to the portion having another mark finally detected in the step 4), the remainder of the order of the user to modulus q corresponding to the portion having another mark detected for the first time in the step 7), and the remainder of the order of the user to modulus q corresponding to the portion having another mark finally detected in the step 9), thereby estimating a candidate of a colluding user.

This summary of the invention does not necessarily describe all necessary features so that the invention may also be a sub-combination of these described features.

This invention can be more fully understood from the following detailed description when taken in conjunction with the accompanying drawings, in which:
FIG. 1 is a block diagram showing the arrangement of an electronic watermark processing apparatus according to a first embodiment of the present invention;
FIG. 2 is a block diagram showing the arrangement of a modification of the first embodiment;
FIG. 3 is a block diagram showing details of the arrangement of a data transformation assignor shown in FIG. 1;
FIG. 4 is a block diagram showing a modification of the data transformation assignor shown in FIG. 1;
FIG. 5 is a flow chart showing an ID mark generation algorithm in the first embodiment;
FIG. 6 is a block diagram showing the arrangement of a watermark detection apparatus in the first embodiment;
FIG. 7 is a block diagram showing the arrangement of a watermark detection apparatus in the modification of the first embodiment;
FIG. 8 is a flow chart showing an ID mark decoding algorithm in the first embodiment;
FIG. 9 is a flow chart showing an ID mark generation algorithm in a second embodiment of the present invention;
FIG. 10 is a flow chart showing an ID mark decoding algorithm in the second embodiment;
FIG. 11 is a flow chart showing an ID mark generation algorithm in a third embodiment of the present invention;
FIG. 12 is a flow chart showing an ID mark decoding algorithm in the third embodiment;
FIG. 13 is a flow chart showing a first half of an ID mark generation algorithm in a fourth embodiment of the present invention;
FIG. 14 is a flow chart showing a second half of the ID mark generation algorithm in the fourth embodiment of the present invention;
FIG. 15 is a flow chart showing a first half of an ID mark decoding algorithm in the fourth embodiment of the present invention;
FIG. 16 is a flow chart showing a second half of the ID mark decoding algorithm in the fourth embodiment of the present invention; and
FIG. 17 is a flow chart showing an ID mark generation algorithm in a modification of the fourth embodiment of the present invention.

A preferred embodiment of an electronic watermark processing apparatus according to the present invention will now be described with reference to the accompanying drawings.

### First Embodiment

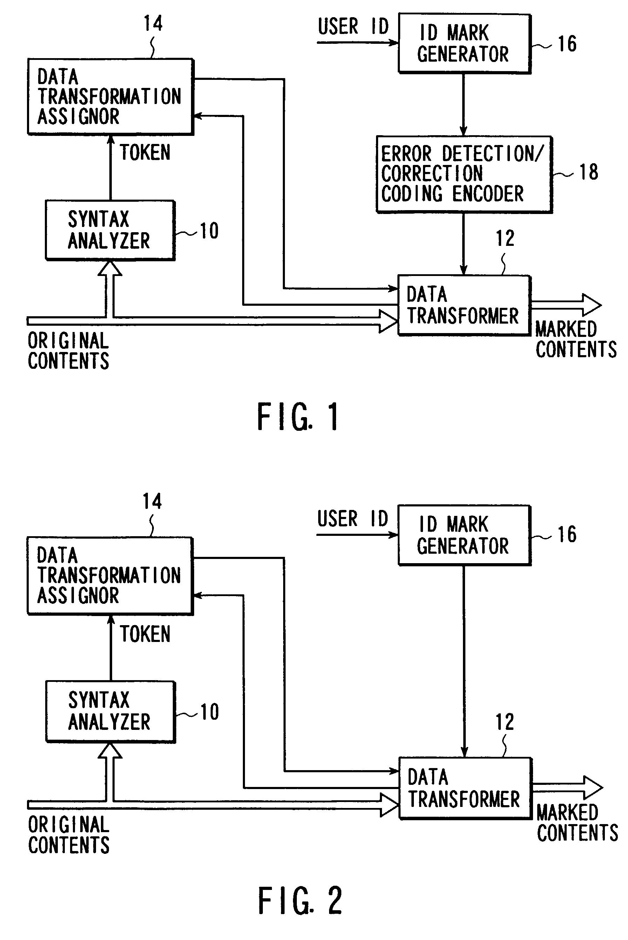

FIG. 1 is a block diagram showing the entire arrangement of an electronic watermark processing apparatus of the first embodiment. Digital data (to be referred to as original contents hereinafter) as a work is supplied to a syntax analyzer 10 and a data transformer 12. The contents are constituted by a set of data having a plurality of certain meanings. This set of data will be referred to as a token hereinafter in this specification. In coding, e.g., MPEG video data, various header codes or VLC codes etc. are used as a token. The position in the contents and value of each token can be known by analyzing the syntax of the data. The syntax analyzer 10 analyzes the syntax of the original contents to obtain the token. Information associated with the token is supplied to a data transformation assignor 14. The data transformation assignor 14 supplies data transformation rules to the data transformer 12 in accordance with the token.

A user ID unique to a user is supplied to an ID mark generator 16. An ID mark allowing to specify the user name is generated and supplied to an error detection/correction coding encoder 18. The error detection/correction coding encoder 18 performs error detection/correction coding of the user ID mark and supplies the coded ID mark to the data transformer 12. The error detection/correction coding encoder 18 is not essential for the present invention and may be omitted, as shown in FIG. 2.

The data transformer 12 processes a predetermined bit of the contents, in correspondence with the ID mark, in accordance with a data transformation instruction supplied from the data transformation assignor 14, thereby embedding the ID mark (electronic watermark) into the contents. As a method of embedding an electronic watermark into, e.g., an MPEG moving image, luminance data V of a pixel (x, y) of an i-th frame is set to be V + 1 when the data to be embedded is "1" or V when the data to be embedded is "0", thereby embedding the electronic watermark, as in the prior art.

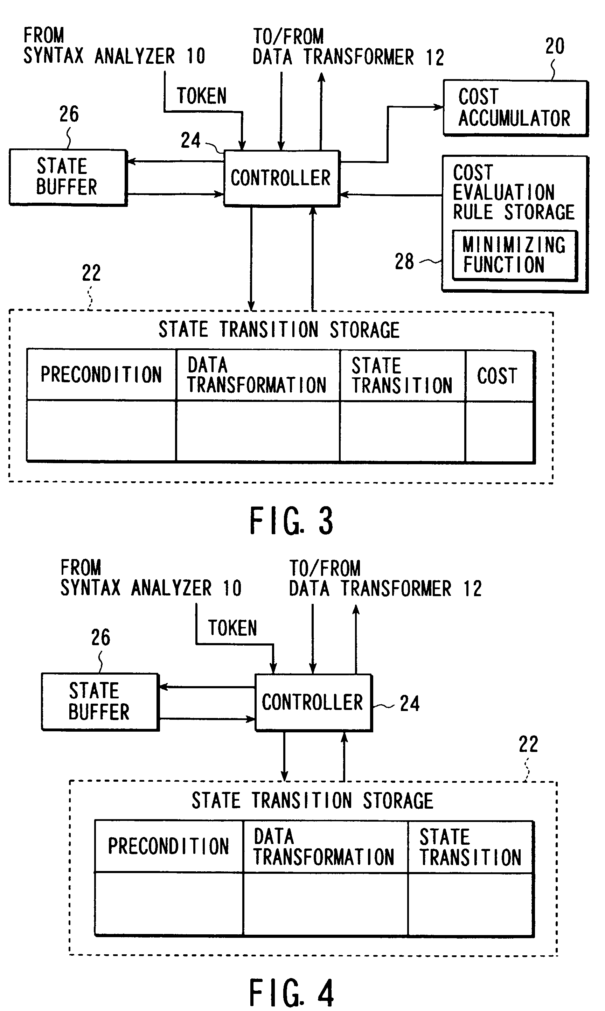

FIG. 3 is a block diagram showing details of the arrangement of the data transformation assignor 14. The data transformation assignor 14 comprises a state transition storage 22 for storing various rules of the state transition, data transmission for the transitions, a state buffer 26 for storing the current state of contents, a cost evaluation rule storage 28 for storing a cost evaluation rule, a cost accumulator 20, and a controller 24 for controlling the respective sections. Information associated with the token from the syntax analyzer 10 is supplied to the controller 24. Data after electronic watermark embedding is supplied from the data transformer 12 to the controller 24. The controller 24 outputs a data transformation instruction representing the contents of data transformation read out from the state transition storage 22 to the data transformer 12. The state transition storage 22 stores the contents of data transformation (data embedding rule) for each precondition, the transition state as the state after transformation, and the cost (a quantity for determining whether the contents quality such as an image quality or the data length largely changes due to embedding of watermark). Every time data transformation (watermark embedding) is performed, a transition state corresponding to the selected contents of data transformation is set in the state buffer 26. The controller 24 searches for a precondition corresponding to the token, reading out corresponding contents of data transformation, and supplies the contents of data transformation to the data transformer 12. If it is estimated on the basis of the cost that the data largely changes due to watermark embedding, no data transformation is performed and, if exists, other appropriate data transformation is selected. The cost evaluation rule storage 28 is arranged for this purpose. The storage 28 compares the cost accumulated in the cost accumulator 20 with the cost corresponding to the contents of data transformation selected in the state transition storage 22. If a change in data beyond a predetermined value is expected, rule of data transformation is not executed.

The data transformer 12 returns to information associated with the actually transformed data to the controller 24. The controller 24 calculates the cost on the basis of the data, and the cost accumulator 20 accumulates the cost.

In the present invention, determination of a change in quality of contents, which is made on the basis of the cost, is not essential, and the cost determination may be omitted. In this case, the item of "cost" is omitted from the state transition storage 22, as shown in FIG. 4, and the cost accumulator 20 and the cost evaluation rule storage 28 are omitted.

As the characteristic feature of the first embodiment, information representing not only the user but also whether the user is included in a user pair, i.e., arbitrary two of all users, who may receive the digital data is used for a watermark, unlike the prior art.

Assuming that digital data of an MPEG moving image is used by three users "A", "B", and "C", a 3-bit ID mark representing whether one of the users is included in the pair of users "A" and "B", the pair of users "B" and "C", or the pair of users "A" and "C" is embedded. When the user is included in the pair of users "A" and "B", the first bit of the ID data is set at "1". When the user is included in the pair of users "B" and "C", the second bit of the ID data is set at "1". When the user is included in the pair of users "A" and "C", the third bit of the ID data is set at "1". The remaining bit data are set at "0". As in the prior art, to embed this 3-bit ID mark, when the first bit data is "1", luminance data V1 of a pixel (x1, y1) of a first frame is set to be "V1 + 1"; otherwise, the luminance data V1 is not changed. When the second or third bit data is "1", a corresponding one of luminance data V2 and V3 of pixels (x2, y2) and (x3, y3) of second and third frames is set at "V2 + 1 or V3 + 1; otherwise, the luminance data V2 or V3 is not changed.

Such luminance data transformation is performed by the data transformer 12.

A case wherein the user illicitly copies such marked contents without permission of the copyright owner and sells it will be described next. As in the prior art, the users "A" and "B" try to collude and compare their data to alter the ID mark. It can be estimated that the difference data, i.e., the luminance data V2 of the pixel (x2, y2) of the second frame or the luminance data V3 of the pixel (x3, y3) of the third frame is part of the watermark unique to the user "A" or user "B", so the users "A" and "B" try to rewrite the watermark in the following manner.
(f2; x2, y2) : (V2 or V2 + 1) → V2 + ΔV2

This means that the luminance data V2 or V2 + 1 of the pixel (x2, y2) of the second frame is rewritten to V2 + ΔV2.
(f3; x3, y3) : (V3 or V3 + 1) → V3 + ΔV3

This means that the luminance data V3 or V3 + 1 of the pixel (x3, y3) of the third frame is rewritten to V3 + ΔV3.

How to select ΔV2 and ΔV3 will be considered.
(a) ΔV2 = 1, ΔV3 = 0
   This is the same as the ID mark embedded for the user "B".
(b) ΔV2 = 0, ΔV3 = 1
   This is the same as the ID mark embedded for the user "A".
(c) ΔV2 = 1, ΔV3 = 1
   This means that the colluders are included in the users "A", "B", and "C" although the two cannot be specified.
(d) ΔV2 = 0, ΔV3 = 0
   This means that the colluders are the users "A" and "B".

Due to the same reasoning as in the prior art, the users "A" and "B" determine that ΔV2 and ΔV3 need be rewritten to data other than (a) and (b) because the pieces of identification information (a) and (b) represent the users "B" and "A" themselves, respectively. The users "A" and "B" rewrite ΔV2 and ΔV3 to the data (c) or (d) and re-distribute the illicit copy. However, unlike the prior art, when the data is rewritten to the data (d), it is obvious that the colluders are the users "A" and "B". In (c), the colluders cannot be specified. However, when the ID mark is embedded L times, i.e., into 3L pixels, all of the L ID marks accidentally have the data (d) at a probability of only (1/2)^{L}. This is sufficiently effective in practice.

As described above, according to the first embodiment, information representing whether a user is included in a user pair, i.e., arbitrary two of all users, who may receive the digital data, is embedded. With this arrangement, even when a plurality of users collude and alter the difference data to data other than those representing themselves, the data representing the user pair remains in the altered data, and the collusion fails.

The ID mark is not limited to the information for identifying the user name, and the present invention can also be applied to a case wherein information for identifying a general object is added to digital data to be transferred to the user without making the information perceptible to the user. For example, the information can be transferred as part of a message without making the meaning of the mark noticeable to the user, though the user can perceive the presence of the mark. As information other than the user name identification information, information for identifying the date and time of use, the user terminal, or the digital data, the digital data transfer path, or a description of a use condition can be used.

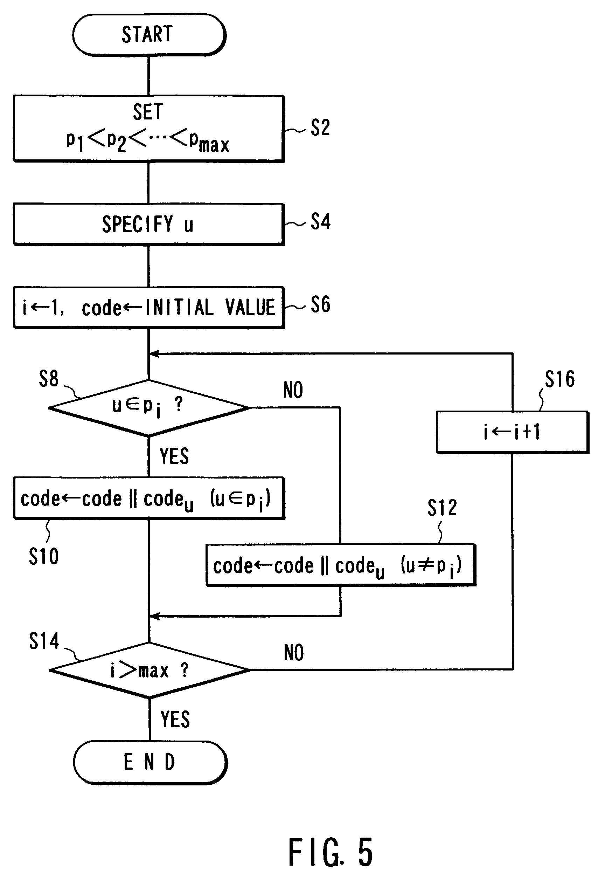

FIG. 5 is a flow chart showing an ID mark generation algorithm in the first embodiment. This algorithm can be applied not only the user name ID mark but also a general ID mark. In step S2, an order is set for identification object subsets (pairs of arbitrary two of all users who may receive the digital data) p₁, p₂, ..., pₘₐₓ for convenience (p₁ < p₂ < ... < pₘₐₓ). In step S4, a user "u" as an identification object is specified. In step S6, 1 is set as a variable i, and a bit length of 0 is set as an initial value of "code". In step S8, it is determined whether the user "u" is included in a subset pᵢ. If YES in step S8, an ID mark bit code (u ε pᵢ) (= 1: in the first embodiment) is generated in step S10 to concatenate to the preceding ID mark. If NO in step S8, an ID mark bit code (u ≠ pᵢ) (= 0: in the first embodiment) is generated in step S12 to concatenate to the preceding ID mark. The mark generated in step S10 or S12 is not limited to 1 bit and may be a plurality of bits. The symbol ≠ means that the user does not belong to the set (negation of ε). In step S14, it is determined whether the variable i is larger than max (the total number of subsets). If NO in step S14, the variable i is incremented by one (+1) in step S16. The flow returns to step S8 to determine whether the user "u" is included in the next subset pᵢ. If YES in step S14, determination whether the user "u" is included is complete for all the subsets pᵢ. It is determined that each bit of the ID mark is completely generated to concatenate to the preceding ID mark, and the operation is ended.

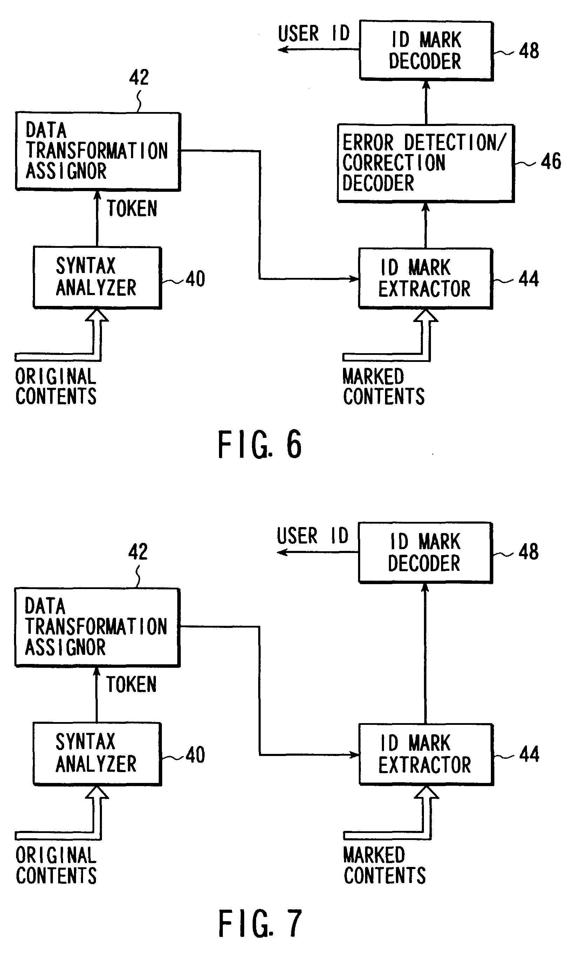

FIG. 6 shows an example of a watermark detection apparatus used to identify a user who is suspected for having illicitly extracted watermark from contents when contents which are suspected to be an illicit copy are being distributed. To detect the watermark embedding position, original contents are supplied to a syntax analyser 40, and information associated with the token is input to a data transformation assignor 42, as in the electronic watermark processing apparatus shown in FIG. 1. The data transformation assignor 42 generates, from the token, transformation contents information representing the watermark embedding position and the transformation contents. Since the watermark embedding position and the transformation contents are determined in units of original contents, the transformation contents information need not be obtained from the token every time. Once the transformation contents information is obtained, the information may be stored in, e.g., a storage in units of contents and read out. In this case, a storage is arranged in place of the syntax analyser 40 and the data transformation assignor 42.

The marked contents and the transformation contents information from the data transformation assignor 42 are supplied to an ID mark extractor 44. The ID mark extractor 44 extracts the embedded ID mark from the contents in accordance with the transformation contents information. The extracted ID mark is supplied to an ID mark decoder 48 through an error detection/correction decoder 46 to detect the user ID in accordance with the ID mark. When the electronic watermark processing apparatus has no error detection/correction coding encoder 18, the error detection/correction decoder 46 is omitted. FIG. 7 shows a watermark detection apparatus having no error detection/correction decoder 46.

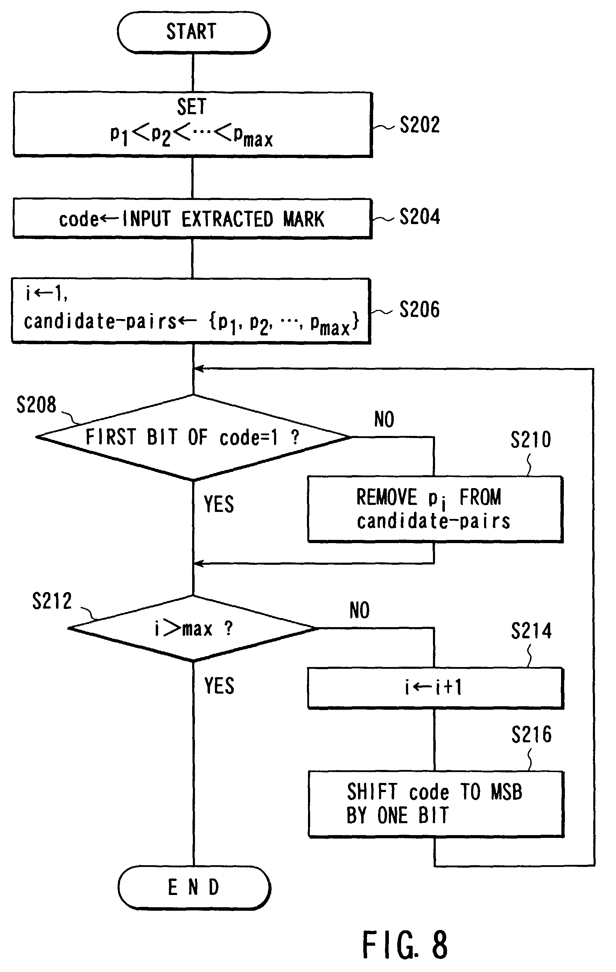

FIG. 8 shows the algorithm of the ID mark decoder 48 in the first embodiment. In step S202, the same order as in embedding is set for the identification object subsets (arbitrary two of all users who may receive the digital data) p₁, p₂, ..., Pₘₐₓ (p₁ < p₂ < ... < pₘₐₓ). In step S204, the input extracted mark is set as the initial value of "code". In step S206, 1 is set as the variable i, and the set of all user pairs {p₁, p₂, ..., pₘₐₓ} is set for "candidate-pairs", i.e., the candidates of user pairs corresponding to colluders.

In step S208, it is determined whether the first bit of code is 1. If YES in step S208, the flow immediately advances to step S212. If NO in step S208, the user pair pᵢ is removed from "candidate-pairs" in step S210, and then, the flow advances to step S212. In step S212, it is determined whether the variable i is larger than max (the total number of subsets). If NO in step S212, the variable i is incremented by one (+1) in step S214. In step S216, "code" is shifted to the MSB by one bit, and the flow returns to step S208 to determine the first bit of "code". If YES in step S212, the operation is ended. After this, a user pair P remaining in "candidate-pairs" is estimated as a colluder pair.

The characteristic features of the algorithm shown in FIG. 8 will be summarized below. 1) A portion corresponding to each user pair pᵢ is read from the ID mark extracted from digital data, 2) it is determined whether the portion corresponds to "codeᵤ" (u ε pᵢ) embedded on the basis of the algorithm shown in FIG. 5 or any other code, and 3) the user pair pᵢ for which it has been determined that the portion corresponds to "codeᵤ" (u ε pi) can be estimated as a pair of colluding users.

When the ID mark is embedded L times, the above algorithm is executed L times. The user pair P always remaining in "candidate-pairs" in every execution of the algorithm is estimated as a colluder pair.

In the first embodiment, letting N be the number of users, the total number of subsets consisting of arbitrary user pairs is given by _{N}C₂. The code amount of the ID mark is represented on the order of N². As compared to the prior art in which the code amount is on the order of log₂ N, the code amount increases although the arrangement is resistant to collusion of a plurality of users.

Other embodiments of watermark embedding which are resistant to alteration by collusion of users and can prevent an increase in a code amount of an ID mark will be described. The same reference numerals as in the first embodiment denote the same parts in the other embodiments, and a detailed description thereof will be omitted.

### Second Embodiment

The arrangement of the apparatus of the second embodiment is the same as that of the first embodiment, and block diagrams showing the arrangement and a detailed description thereof will be omitted.

As the characteristic feature of the second embodiment, information representing whether a user may receive digital data are used in a concatenation form of AND (represented by a symbol ∩). For example, for a user uᵢ, the following data having a logical meaning that he/she is the user uᵢ, i.e., he/she is included neither in users u₁ to uᵢ₋₁ nor in users uᵢ₊₁ to u_{N} is embedded.
¬u₁ ∩ ¬u₂ ∩ ... ∩ ¬uᵢ₋₁ ∩ uᵢ ∩ ¬uᵢ₊₁ ∩ ¬uᵢ₊₂ ∩ ... ∩ ¬u_{N}
   where ¬ represents negation, and ¬u₁ is data representing negation of the user u₁.

Codes of data to be embedded are specifically assigned in correspondence with the respective items with AND (∩) in the above logical expression.
¬uᵢ → codeᵢ (¬uᵢ)
uᵢ → codeᵢ (uᵢ)

The ID mark to be embedded is generated by causing the codes assigned to the respective items concatenate (represented by a symbol ∥ ). The order of concatenation is not associated with the nature of this embodiment. For the descriptive convenience, the order of suffixes corresponding to users is set.
An ID mark to be embedded for the user u₁: code₁(u₁) ∥ code₁(¬u₂) ∥ code₁(¬u₃) ∥ ... ∥ code₁(¬u_{N})
An ID mark to be embedded for the user u₂: code₂(¬u₁) ∥ code₂(u₂) ∥ code₂(¬u₃) ∥ ... ∥ code₂(¬u_{N})
An ID mark to be embedded for the user u₃: code₃(¬u₁) ∥ code₃(¬u₂) ∥ code₃(u₃) ∥ ... ∥ code₃(¬u_{N})
   ...
An ID mark to be embedded for the user uᵢ: codeᵢ(¬u₁) ∥ codeᵢ(¬u₂) ∥ codeᵢ(¬u₃) ∥ ... ∥ codeᵢ(¬uᵢ₋₁) ∥ codeᵢ(uᵢ) ∥ codeᵢ(¬uᵢ₊₁) ∥ ... ∥ codeᵢ(¬u_{N})
   ...
An ID mark to be embedded for the user u_{N}: code_{N}(¬u₁) ∥ code_{N}(¬u₂) ∥ code_{N}(¬u₃) ∥ ... ∥ code_{N}(¬u_{N-1}) ∥ code_{N}(u_{N)}
Assume that codeᵢ(uⱼ) is "1", and codeᵢ(¬uⱼ) is "0".

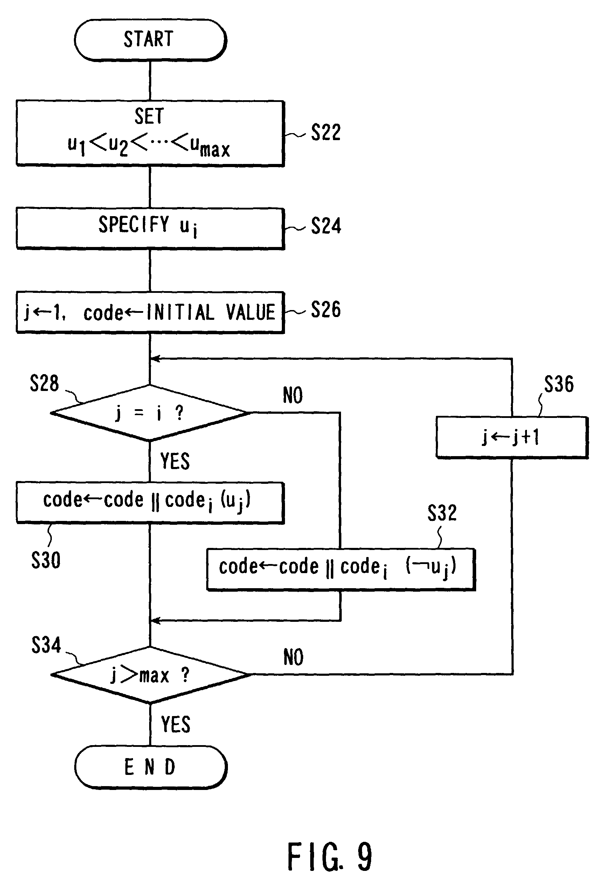

FIG. 9 is a flow chart showing an ID mark generation algorithm in the second embodiment. This algorithm can also be applied to a general ID mark other than the user name ID mark. In step S22, an order is set for all identification objects (all users who may receive digital data) u₁, u₂, ..., uₘₐₓ for convenience (u₁ < u₂ < ... < uₘₐₓ). In step S24, 1 is set at a variable j, and the initial value (bit length: 0) is set as "code". In step S28, it is determined whether the variable j equals a parameter i representing the user uᵢ. If YES in step S28, one bit codeᵢ(uⱼ) (= "1") of the ID mark is generated to concatenate to the preceding ID mark in step S30. If NO in step S28, one bit codeᵢ(¬uⱼ) of the ID mark is generated to concatenate the preceding ID mark in step S32. In step S34, it is determined whether the variable j is larger than max (the total number of users). If NO in step S34, the variable j is incremented by one (+1) in step S36, and the flow returns to step S28 to determine whether the variable j equals i. If YES in step S34, determination whether the user uᵢ equals each of all the users is complete. It is determined that each bit of the ID mark is completely generated to concatenate to the preceding ID mark, and the operation is ended.

A case wherein the user illicitly copies such marked contents without permission of the copyright owner and sells it will be described next. Assume that the users uᵢ and uⱼ collude. In this case, codeᵢ(uᵢ) and codeᵢ(¬uⱼ) in the data for the user uᵢ are different from codeⱼ(¬uᵢ) and codeⱼ(¬uⱼ) in the data for the user uⱼ. A rewrite of these codes will be considered.

More specifically, codeᵢ(uᵢ) and codeᵢ(¬uⱼ) are rewritten to codeᵢ', and codeⱼ(¬uᵢ) and codeⱼ(uⱼ) are rewritten to codeⱼ'. Rewrite forms are as follows.
(a) codeᵢ' = codeᵢ(uᵢ), codeⱼ' = codeᵢ(¬uⱼ)
   This is the same as the ID mark embedded for the user uᵢ.
(b) codeᵢ' = codeⱼ(¬uᵢ), codeⱼ' = codeⱼ(uⱼ)
   This is the same as the ID mark embedded for the user uⱼ.
(c) codeᵢ' = codeᵢ(uᵢ), codeⱼ' = codeⱼ(uⱼ)
   This means that the colluders are the users uᵢ and uⱼ.
(d) codeᵢ' = codeⱼ(¬uᵢ), codeⱼ' = codeᵢ(¬uⱼ)
   In this case, the colluders cannot be specified.
(e) codeᵢ' ≠ codeᵢ(uᵢ) ≠ codeⱼ(¬uᵢ), codeⱼ' =
   This means that the user uᵢ is one of the colluders.
(f) codeᵢ' = ****, codeⱼ' ≠ codeⱼ(uⱼ) ≠ codeᵢ(¬uⱼ)
   This means that the user uⱼ is one of the colluders.

Due to the same reasoning as in the prior art, the users uᵢ and uⱼ determine that the marks need be rewritten to data other than (a) and (b) because the pieces of identification information (a) and (b) represent the users uᵢ and uⱼ themselves, respectively. The users uᵢ and uⱼ rewrite the marks to (c), (d), (e), or (f) and redistribute the illicit copy. However, unlike the prior art, in (c), it is obvious that the colluders are the users uᵢ and uⱼ. In (e) or (f) as well, it is obvious that the user uᵢ or uⱼ is one of the colluders. In (d), the colluders cannot be specified. However, when the ID mark is embedded L times, as in the first embodiment, all of the L ID marks have the data (d) at a probability of only (1/4)^{L} by chance. This is sufficiently effective in practice.

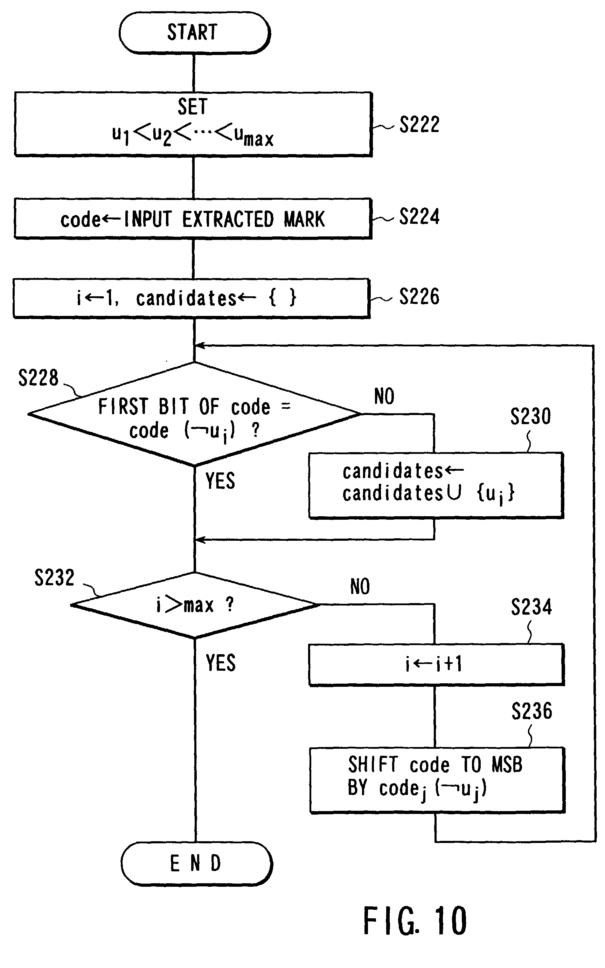

FIG. 10 shows the algorithm of the ID mark decoder 48 of the second embodiment. In step S222, the same order as that in embedding is set for the identification objects (users) u₁, u₂, ..., uₘₐₓ (u₁ < u₂ < ... < uₘₐₓ). In step S224, the input extracted mark is set as the initial value of "code". In step S226, 1 is set as the variable i, and an empty set { } is set for a set "candidates" as a set of candidates of colluding users.

In step S228, it is determined whether the first bit of "code" is codeⱼ(¬uᵢ) for j. If YES in step S228, the flow immediately advances to step S232. If NO in step S228, the user uᵢ is added to the set "candidates" in step S230, and then, the flow advances to step S232. In step S232, it is determined whether the variable i is larger than max (the total number of users). If NO in step S232, the variable i is incremented by one (+1) in step S234. In step S236, "code" is shifted to the MSB by the length (the number of bits) of codeⱼ(¬uᵢ), and the flow returns to step S228 to determine the first bit of "code". If YES in step S232, the operation is ended. After this, the user included in the set "candidates" is estimated to be one of colluders.

The algorithm shown in FIG. 10 will be summarized. 1) A portion corresponding to each identification object uᵢ is read from the ID mark extracted from digital data, 2) it is determined whether the portion is the mark codeᵢ(uⱼ) embedded on the basis of the algorithm shown in FIG. 9 or other code, and 3) the user for which it has been determined in 2) that the portion corresponds to codeᵢ(uⱼ) can be estimated as one of colluding users.

When the ID mark is embedded L times, the above algorithm is executed L times. The user included in "candidates" in every execution of the algorithm is estimated as one of colluders.

As described above, according to the second embodiment, the ID mark to which information representing whether the user is one who may receive the digital data concatenation in a form of AND is embedded. With this arrangement, even when a plurality of users collude to alter the difference data and rewrite the data of themselves to other data, collusion fails because data representing that they are in collusion remains in the altered data.

In the second embodiment, the code amount of the ID mark is represented on the order of N and can be much smaller than that in the first embodiment.

### Third Embodiment

The second embodiment is not resistant to collusion of three or more users.

Assume that users uᵢ, uⱼ, and uₖ collude.
The ID mark embedded for the user uᵢ: ... ∥ codeᵢ(uᵢ) ∥ ... ∥ codeᵢ(¬uⱼ) ∥ ... ∥ codeᵢ(¬uₖ) ∥ ...
The ID mark embedded for the user uⱼ: ... ∥ codeⱼ(¬uᵢ) ∥ ... ∥ codeⱼ(uⱼ) ∥ ... ∥ codeⱼ(¬uₖ) ∥ ...
The ID mark embedded for the user uₖ: ... ∥ codeₖ(¬uᵢ) ∥ ... ∥ codeₖ(¬uⱼ) ∥ ... ∥ codeₖ(uₖ) ∥ ...

A portion Pᵢⱼ of codeᵢ(uᵢ or ¬uᵢ) and codeⱼ(uⱼ or ¬uⱼ) can be specified from the difference data of the data of the users uᵢ and uⱼ. However, the data to which each point belongs cannot be known. Similarly, a portion Pⱼₖ of codeⱼ(uⱼ or ¬uⱼ) and codeₖ(uₖ or ¬uₖ) can be specified from the difference data of the data of the users uⱼ and uₖ. However, the data to which each portion belongs cannot be known.

Portions Pᵢ, Pⱼ, and Pₖ of the users uᵢ, uⱼ, and uₖ can be specified from these subsets in the following manner.
Pᵢⱼ ∩ /Pⱼₖ → {portion of codeᵢ(uᵢ or ¬uᵢ)}
   ≡ Pᵢ
   = Pᵢⱼ - Pⱼₖ

The symbol "/" represents a complement. When P is a portion in the data, /P is a portion other than P in the data.
Pⱼₖ ∩ /Pᵢⱼ → {portion of codeₖ(uₖ or ¬uₖ)}
   ≡ Pₖ
   = Pᵢⱼ - Pᵢⱼ
Pᵢⱼ ∩ /Pᵢ → {portion of codeⱼ(uⱼ or ¬uⱼ)}
   ≡ Pⱼ
   = Pᵢⱼ - Pⱼ

The following facts can be known.

The portion Pi of the embedded data of the user uᵢ represents codeᵢ(uᵢ). The portion Pᵢ of the embedded data of the user uᵢ represents codeᵢ(¬uᵢ). Therefore, codeᵢ(uᵢ) and codeᵢ(¬uᵢ) are known.

In a similar manner, codeⱼ(uⱼ), codeⱼ(¬uⱼ), codeₖ(uₖ), and codeₖ(¬uₖ) are known.

When the colluders write codeᵢ(¬uᵢ), codeⱼ(¬uⱼ), and codeₖ(¬uₖ) in Pᵢ, Pⱼ, and Pₖ, respectively, data corresponding to nobody can be generated.

To increase the resistance to such collusion of three or more users, the following well-order is set for the set of users. This order is determined by the contents provider.
u₁ < u₂ < ... < uᵢ₋₁ < uᵢ < uᵢ₊₁ < ... < uⱼ₋₁ < uⱼ < uⱼ₊₁ < ... < u_{N}

The order is set to specify a subset having users in collusion as the minimum and maximum values. For example, when the subset uᵢ < uᵢ₊₁ < ... < uⱼ₋₁ < uⱼ is specified, the user uᵢ, uⱼ, and the like are estimated as users in collusion.
An ID mark to be embedded for the user u₁: code₁(u₁) ∥ code₁(¬u₂) ∥ code₁(¬u₃) ∥ ... ∥ code₁(¬u_{N})
An ID mark to be embedded for the user u₂: code₂(¬u₁) ∥ code₂(u₂) ∥ code₂(¬u₃) ∥ ... ∥ code₂(¬u_{N})
An ID mark to be embedded for the user u₃: code₃(¬u₁) ∥ code₃(¬u₂) ∥ code₃(u₃) ∥ ... ∥ code₃(¬u_{N})
   ...
An ID mark to be embedded for the user uᵢ: codeᵢ(¬u₁) ∥ codeᵢ(¬u₂) ∥ codeᵢ(¬u3) ∥ ... ∥ codeᵢ(¬uᵢ₋₁) ∥ codeᵢ(uᵢ) ∥ codeᵢ(¬uᵢ₊₁) ∥ ... ∥ codeᵢ(¬u_{N})
   ...
An ID mark to be embedded for the user u_{N}: code_{N}(¬u₁) ∥ code_{N}(¬u₂) ∥ code_{N}(¬u₃) ∥ ... ∥ code_{N}(¬u_{N-1}) ∥ code_{N}(u_{N})

Generally, in the ID mark embedded for the user uᵢ, codeᵢ(¬u₁) ∥ codeᵢ(¬u₂) ∥ ... ∥ codeᵢ(¬uᵢ₋₁) ∥ before codeᵢ(uᵢ) represents the absence of collinders (users below the i-th user in order are not in collusion). Similarly, codeᵢ(¬uᵢ₊₁) ∥ ... ∥ codeᵢ(¬u_{N}) after codeᵢ(uᵢ) also means the absence of colluders (users above the i-th user in order are not in collusion). In the third embodiment, an order is set for all the identification objects, and information representing whether an object to be identified is below, equal, or above each of the remaining identification objects in order is used as information for identifying the object.

As the ID marks embedded for the users uᵢ and u_{j,} different marks are assigned when the marks have different meanings depending on their positions. For example, in the ID mark embedded for the user uᵢ, the i-th data means that this data corresponds to the user uᵢ. In the ID mark embedded for the user uⱼ, the i-th data means that users preceding the user uⱼ are not in collusion. In addition, in the ID mark embedded for the user uᵢ, the k-th (i < k < j) data means that the users succeeding the user uₖ are not in collusion. In the ID mark embedded for the user uⱼ, the k-th data means the users preceding the user uₖ are not in collusion.

In consideration of this, the following marks can be assigned.
code₁(u₁) ≠ code₂(¬u₁) = code₃(¬u₁) = ... = code_{N}(¬u₁)
code₁(¬u₂) ≠ code₂(u₂) ≠ code₃(¬u₂) = ... = code_{N}(¬u₂)
code₁(¬u₃) = code₂(¬u₃) ≠ code₃(u₃) ≠ code₄(¬u₃) = ... = code_{N}(¬u₃)
   ...

When the same variable is used as the same codes, a total of three variables "a", "b", and "c" can be used to represent the ID marks as follows.
The ID mark embedded for the user u₁:
   a⁽¹⁾b⁽²⁾b⁽³⁾................b(N)
The ID mark embedded for the user u₂:
   c⁽¹⁾a⁽²⁾b⁽³⁾...a⁽ⁱ⁾.........b^{(N)}
The ID mark embedded for the user uᵢ:
   c⁽¹⁾c⁽²⁾c⁽³⁾...........c^{(N-1)}a^{(N)}
The ID mark embedded for the user u_{N}:
   a⁽¹⁾b⁽²⁾b⁽³⁾.............b^{(N)}

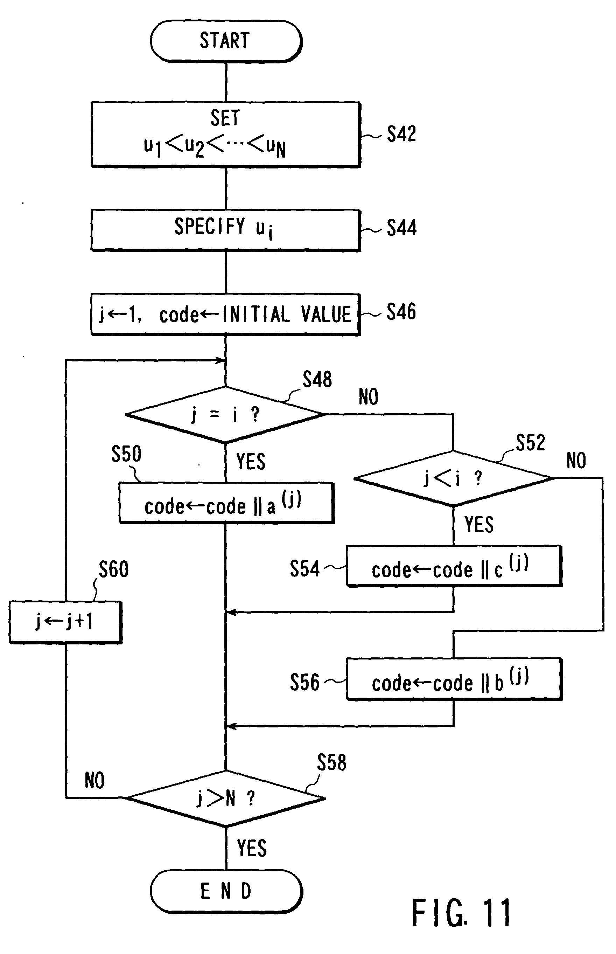

FIG. 11 is a flow chart showing an ID mark generation algorithm in the third embodiment. This algorithm can also be applied to a general ID mark other than the user name ID mark. In step S42, an order is set for all identification objects (all users who may receive digital data) u₁, u₂, ..., u_{N} (u₁ < u₂ < ... < u_{N}). In step S44, the user uᵢ as the identification target is specified. In step S46, 1 is set at a variable j, and the initial value (bit length: 0) is set as "code".

In step S48, it is determined whether the variable j equals a parameter i representing the user uᵢ. If YES in step S48, one bit a⁽¹⁾ of the ID mark is generated to concatenate to the preceding ID mark in step S50. If NO in step S48, it is determined in step S52 whether the variable j is smaller than the parameter i representing the user uᵢ. If YES in step S52, one bit c^{(j)} of the ID mark is generated to concatenate to the preceding ID mark in Step S54. If NO in step S52, one bit b^{(j)} of the ID mark is generated to concatenate to the preceding ID mark in step S56.

In step S58, it is determined whether the variable j is smaller than N (the total number of users). If NO in step S58, the variable j is incremented by one (+1) in step S60, and the flow returns to step S48 to determine whether the variable j equals the parameter i. If YES in step S58, determination whether the user uᵢ equals each of the remaining users is complete. It is determined that each bit of the ID mark is completely generated to concatenate to the preceding ID mark, and the operation is ended.

The reason why three users uᵢ, uⱼ, and uₖ cannot successfully collude when such ID marks are embedded will be described next.
The ID mark embedded for the user uᵢ:
   c⁽¹⁾...c⁽ⁱ⁻¹⁾a⁽ⁱ⁾b⁽ⁱ⁺¹⁾....................b^{(N)}
The ID mark embedded for the user uⱼ:
   c⁽¹⁾..........c^{(j-1)}a^{(j)}b^{(j+1)}.............b(N)
The ID mark embedded for the user uₖ:
   c⁽¹⁾.................c^{(k-1)}a^{(k)}b^{(k+1)}......b^{(N)}

For the success of collusion of the three users, the following ID mark must be obtained.
c⁽¹⁾...c⁽ⁱ⁻¹⁾*⁽ⁱ⁾*⁽ⁱ⁺¹⁾...*^{(k-1)}*^{(k)}b^{(k+1)}...b^{(N})

The subset *⁽ⁱ⁾*⁽ⁱ⁺¹⁾...*^{(k-1)}*^{(k)} specifies the colluder. Therefore, when the minimum value *⁽ⁱ⁾ is a⁽ⁱ⁾, it can be known that the user uᵢ is in collusion. To prevent this, *⁽ⁱ⁾ = c⁽ⁱ⁾ must be set to let it be supposed that the user uᵢ is not in collusion. When *⁽ⁱ⁾ = b⁽ⁱ⁾, or *⁽ⁱ⁾ is set at another code, this means that the user uᵢ is in collusion. If the portion Pᵢ of the ID mark of the user uᵢ can be specified, *⁽ⁱ⁾ = c⁽ⁱ⁾ can be easily set from the data of the user uₖ. However, it is the whole Pᵢ ∪ ... ∪ Pⱼ₋₁ (≡ Pᵢⱼ -Pⱼₖ) that can be specified, and the portion Pᵢ cannot be specified.

Simultaneously, when the maximum value *^{(k)} is a^{(k)}, it can be known that the user uₖ is in collusion. To prevent this, *^{(k)} = b^{(k)} must be set to let it be supposed that the user uₖ is not in collusion. When *^{(k)} = c^{(k)}, or *^{(k)} is set at another code, this means that the user uₖ is in collusion. If the portion Pₖ of the ID mark of the user uₖ can be specified, *^{(k)} = b^{(k)} can be easily set from the data of the user uᵢ. However, it is the whole Pⱼ₊₁ ∪ ... ∪ Pₖ (≡ Pⱼₖ -Pᵢⱼ) that can be specified, and the portion Pₖ cannot be specified.

Setting *⁽ⁱ⁾ = c⁽ⁱ⁾ and _{*}^{(k)} = b^{(k)} by a random operation depends on chance. Letting p⁽ⁱ⁾ and p^{(k)} be the probabilities for setting of these codes, the probability of success of collusion is given by p⁽ⁱ⁾ × p^{(k)}. Generally, p⁽ⁱ⁾ ≦ 1/2 and p^{(k)} ≦ 1/2. Especially, when the code length of c⁽ⁱ⁾ or b^{(k)} is long to some extent, p⁽ⁱ⁾ and p^{(k)} are sufficiently smaller than 1. Therefore, the probability of success of collusion is low. As in the above embodiments, when identification information is embedded L times, this probability can be further lowered to (p⁽ⁱ⁾ × p^{(k)})^{L}.

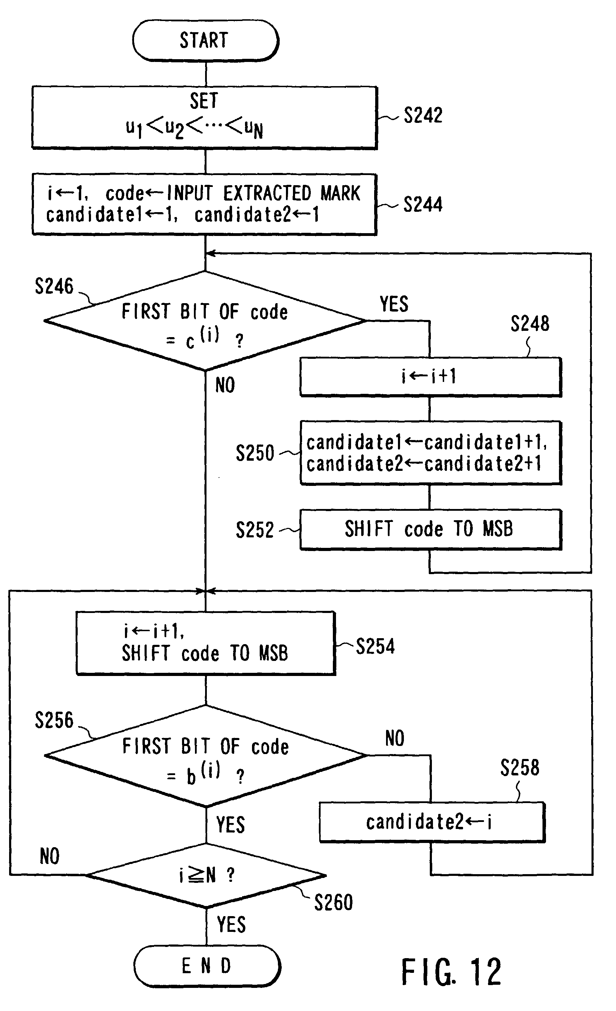

FIG. 12 shows the algorithm of an ID mark decoder 48 of the third embodiment. In step S242, the same order as in embedding is set for the identification objects (users) u₁, u₂, ..., u_{N} (u₁ < u₂ < ... < u_{N}). In step S244, 1 is set as the variable i, the input extracted mark is set as the initial value of "code", 1 is set for "candidate 1" as the first colluder candidate, and 1 is set for "candidate 2" as the second colluder candidate. In step S246, it is determined whether the first bit of "code" is c⁽ⁱ⁾. If YES in step S246, the variable i is incremented by one (+1) in step S248, and "candidate 1" as the first colluder candidate and "candidate 2" as the second colluder candidate are incremented by one (+1) in step S250. In step S252, "code" is shifted to the MSB by the length of c⁽ⁱ⁾, and the flow returns to step S246 to determine the first bit of "code". The length of c⁽ⁱ⁾ is represented by |c⁽ⁱ⁾|, and assume that |a⁽ⁱ⁾| = |b⁽ⁱ⁾| = |c⁽ⁱ⁾|. If NO in step S246, the variable i is incremented by one (+1), and "code" is shifted to the MSB by the length of c⁽ⁱ⁾ in step S254. In step S256, it is determined whether the first bit of "code" is b⁽ⁱ⁾. If NO in step S256, the variable i is substituted into "candidate 2" as the second colluder candidate in step S258, and the flow returns to step S254. If YES in step S260, the operation is ended. After this, "candidate 1" and "candidate 2" are estimated to be two of the colluders.

The characteristic features of the algorithm shown in FIG. 12 will be summarized. 1) A portion corresponding to each identification object ui is sequentially read from the first bit of the ID mark extracted from digital data, 2) it is determined whether the portion is the mark c⁽ⁱ⁾ embedded on the basis of the algorithm shown in FIG. 11 or another mark, and the processes 1) and 2) are repeated until a mark other than c⁽ⁱ⁾ appears, 3) i obtained when the mark other than c⁽ⁱ⁾ appears for the first time in 2) is determined as one of the colluding user candidates, 4) a portion corresponding to each identification object uᵢ is read from a portion next to the mark other than c⁽ⁱ⁾ which has appeared for the first time in 2), 5) it is determined whether the portion is the mark b⁽ⁱ⁾ embedded on the basis of the algorithm shown in FIG. 11 or another mark, and the processes 4) and 5) are repeated until a mark other than b⁽ⁱ⁾ appears, 6) i obtained when the mark other than b⁽ⁱ⁾ appears in 5) is "provisionally" determined as the other candidate of the colluding users, 7) the processes 4), 5), and 6) are repeated until the final bit of the extracted ID mark is reached, and 8) the user who has been "provisionally" determined as the other candidate of the colluding users when the final bit of the extracted ID mark is reached is determined as the other candidate of the colluding users.

When the ID mark is embedded L times, the above algorithm is executed L times, and "candidate 1" and "candidate 2" in every execution of the algorithm is estimated as colluders.

In the third embodiment as well, the code amount of the ID mark is represented on the order of N and can be much smaller than that in the first embodiment.

Conventional electronic watermarking methods against collusion are described in "A Scheme of Making Collusion-Secure Watermark", Masahiro Suzuoki et al., SCIS '97 (the 1997 Symposium on Cryptography and Information Security), and "Collusion-Secure Fingerprinting for Digital Data", D. Boneh and J. Shaw, Advances in Cryptography Proceedings of CRYPTO '95, pp. 257 - 270 (1994). In the example of Susuoki et al., a = 00, b = 10, and c = 01. In the example of Boneh et al., "a", "b", and "c" are L (arbitrary positive integer) bits, and aa = b = 00...0 (all 0s), and c = 11...1 (all 1s). That is, coding of the third embodiment is more general than these methods.

### Fourth Embodiment

An embodiment for further reducing the code amount will be described. The Chinese remainder theorem is applied to this embodiment. The Chinese remainder theorem defines that when there are relatively prime numbers p₁, p₂, ..., pₖ (these integers satisfy a relationship n ≦ p1 × p1 × ... × pₖ), n is uniquely obtained from n₁ = n mod p₁, n₂ = n mod P₂, ..., nₖ = n mod pₖ. In an application of this theorem (assume N ≦ p × q), by specifying the r-th user in 1 to p, and the s-th user in 1 to q, the n-th user in the set of all users N in the third embodiment can be specified. The ID mark for specifying the r-th (= n mod p) user and the s-th (= n mod q) user in the two sets of p users and q users has a code amount smaller than that for specifying the nth user in the set of all users with the number N of users.

In the fourth embodiment, the relatively prime numbers p and q for satisfying N ≦ p × q are defined. Instead of the parameter i (i = 1 to N) for specifying the user, the parameter r (1 to p) and s (1 to q) are used to specify each user. For the descriptive convenience, assume that p = 7, and q = 5.
The ID mark embedded for a user u₁:
   a^{(¹)}b^{(²)}b^{(³)}b⁽⁴⁾b⁽⁵⁾b⁽⁶⁾b⁽⁷⁾ a⁽¹⁾b⁽²⁾b⁽³⁾b⁽⁴⁾b⁽⁵⁾
The ID mark embedded for a user u₂:
   c⁽¹⁾a⁽²⁾b⁽³⁾b⁽⁴⁾b⁽⁵⁾b⁽⁶⁾b⁽⁷⁾ c⁽¹⁾a⁽²⁾b⁽³⁾b⁽⁴⁾b⁽⁵⁾
   ...
The ID mark embedded for a user u₆:
   c⁽¹⁾c⁽²⁾c⁽³⁾c⁽⁴⁾c⁽⁵⁾a⁽⁶⁾b⁽⁷⁾ a⁽¹⁾b⁽²⁾b⁽³⁾b⁽⁴⁾b⁽⁵⁾
The ID mark embedded for a user u₇:
   c⁽¹⁾c⁽²⁾c⁽³⁾c⁽⁴⁾c⁽⁵⁾c⁽⁶⁾a⁽⁷⁾ c⁽¹⁾a⁽²⁾b⁽³⁾b⁽⁴⁾b⁽⁵⁾
The ID mark embedded for a user u₈:
   a⁽¹⁾b⁽²⁾b⁽³⁾b⁽⁴⁾b⁽⁵⁾b⁽⁶⁾b⁽⁷⁾ c⁽¹⁾c⁽²⁾a⁽³⁾b⁽⁴⁾b⁽⁵⁾
The first half portion of the above mark,
   *(1)*(2)*(3)*(4)*(5)*(6)*(7) is a mark portion codeᵣ associated with r, and the second half portion
   *(1)*(2)*(3)*(4)*(5) is a mark portion codeₛ associated with s. The position of the mark "a" represents the value of r or s. The marks "a", "b", and "c" included in the mark portion associated with r need not be the same as those included in the second half portion, and the marks included in the second half portion may be d, e, and f.

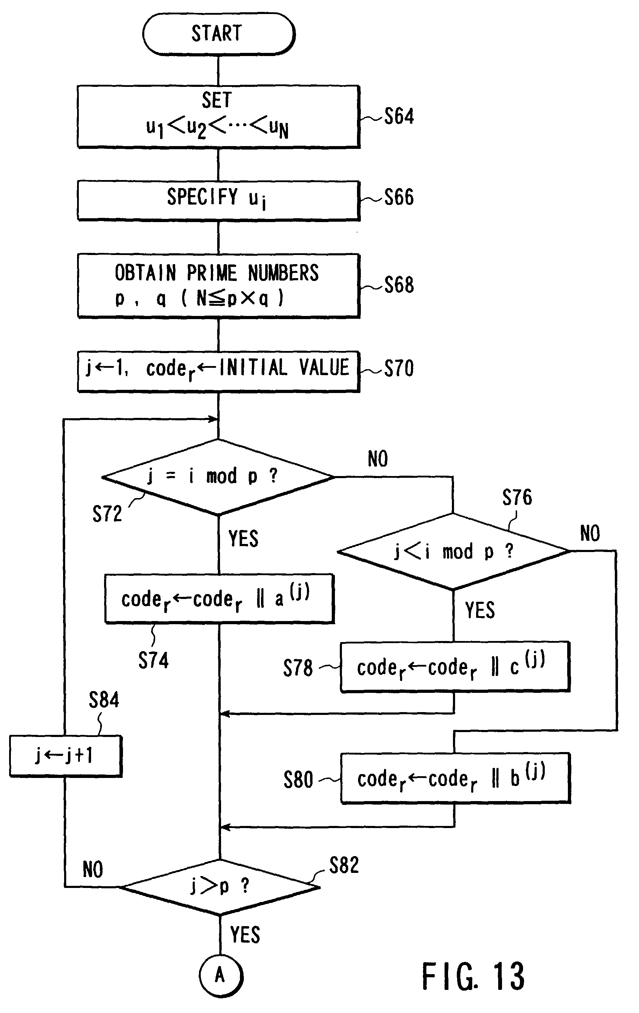

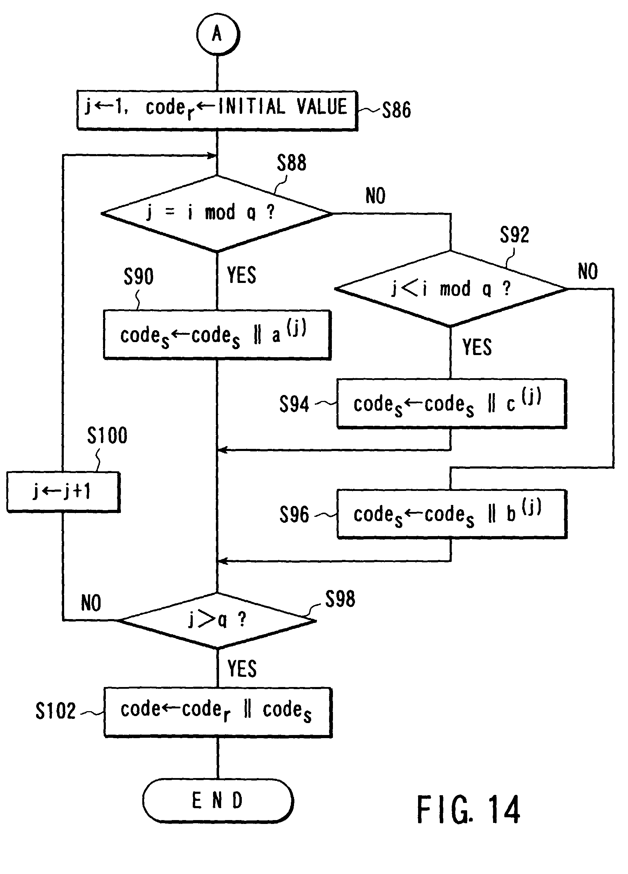

FIGS. 13 and 14 are flow charts showing an ID mark generation algorithm in the fourth embodiment. This algorithm can also be applied to a general ID mark other than the user name ID mark. In step S64, an order is set for all identification objects (all users who may receive digital data) u₁, u₂, ..., u_{N} (u₁, u₂, ..., u_{N}). In step S66, a user uᵢ as an identification object is specified. In step S68, the relative prime numbers p and q for satisfying N ≦ p × q are obtained. In step S70, 1 is set as a variable j, and the initial value (bit length: 0) is set as codeᵣ. In step S72, it is determined whether the variable j equals i mod p. If YES in step S72, one bit a^{(J)} of the ID mark codeᵣ is generated to concatenate to the preceding ID mark codeᵣ in step S74. If NO in step S72, it is determined in step S76 whether the variable j is smaller than i mod p. If YES in step S76, one bit c^{(j)} of the ID mark coder is generated to concatenate to the preceding ID mark codeᵣ in step S78. If NO in step S76, one bit b^{(j)} of the ID mark codeᵣ is generated to concatenate to the preceding ID mark in step S80.

In step S82, it is determined whether the variable j is larger than p. If NO in step S82, the variable j is incremented by one (+1) in step S84, and the flow returns to step S72 to determine whether the variable j equals i mod p. If YES in step S82, it is determined that all bits (p bits) of the ID mark codeᵣ is completely generated to concatenate to the preceding ID mark, and the operation shifts to generation of codeₛ.

In step S86, 1 is set as the variable j, and the initial value (bit length: 0) is set as codeₛ. In step S88, it is determined whether the variable j equals i mod q. If YES in step S88, one bit a(j) of the ID mark codeₛ is generated to concatenate to the preceding ID mark codeₛ in step S90. If NO in step S88, it is determined in step S92 whether the variable j is smaller than i mod q. If YES in step S92, one bit c^{(j)} of the ID mark codeₛ is generated to concatenate to the preceding ID mark codeₛ in step S94. If NO in step S92, one bit b^{(j)} of the ID mark codeₛ is generated to concatenate to the preceding ID mark in step S96.

In step S98, it is determined whether the variable j is larger than q. If NO in step S98, the variable j is incremented by one (+1) in step S100, and the flow returns to step S88 to determine whether the variable j equals i mod q. If YES in step S98, it is determined that all bits (q bits) of the ID mark codeₛ is completely generated to concatenate to the preceding ID mark. In step S102, the ID marks codeᵣ is made to concatenate to the ID mark codeₛ, and generation of ID marks is ended.

When the ID mark is divided into two parts, the code amount is represented not on the order of N but on the (order of p) and (order of q). If p ≒ q, then p2 ≒ q2 ≒ N so the length of the ID mark is on the order of N^{1/2}.

In the fourth embodiment, r1 and r2 are obtained as r, and s1 and s2 are obtained as s. For this reason, it cannot be specified whether the colluders are one user defined by r1 and s1 and the other user defined by r2 and s2, or one user defined by r1 and s2 and the other user defined by r₂ and s₁. To specify one of the combinations, the following third number t must be introduced. Assume that n mod t = u.
N = p × q
N ≦ p × t
N ≦ q × t

In this case, r1 and r2 are obtained as r, s1 and s2 are obtained as s, and t1 and t2 are obtained as t. As is apparent from r and s, the colluder pair includes one user defined by r1 and s1 and the other user defined by r2 and s2 (these candidates will be referred to as n1 and n2), or one user defined by r1 and s2 and the other user defined by r2 and s1 (these candidates will be referred to as n1' and n2'). As is apparent from s and t, the colluder pair includes one user defined by s1 and t1 and the other user defined by s2 and t2 (these candidates will be referred to as m1 and m2), or one user defined by s1 and t2 and the other user defined by s2 and t1 (these candidates will be referred to as m1' and m2'). The colluders are determined as those matching in these four combinations of candidates: (n1, n2), (n1', n2'), (m1, m2), and (m1', m2').

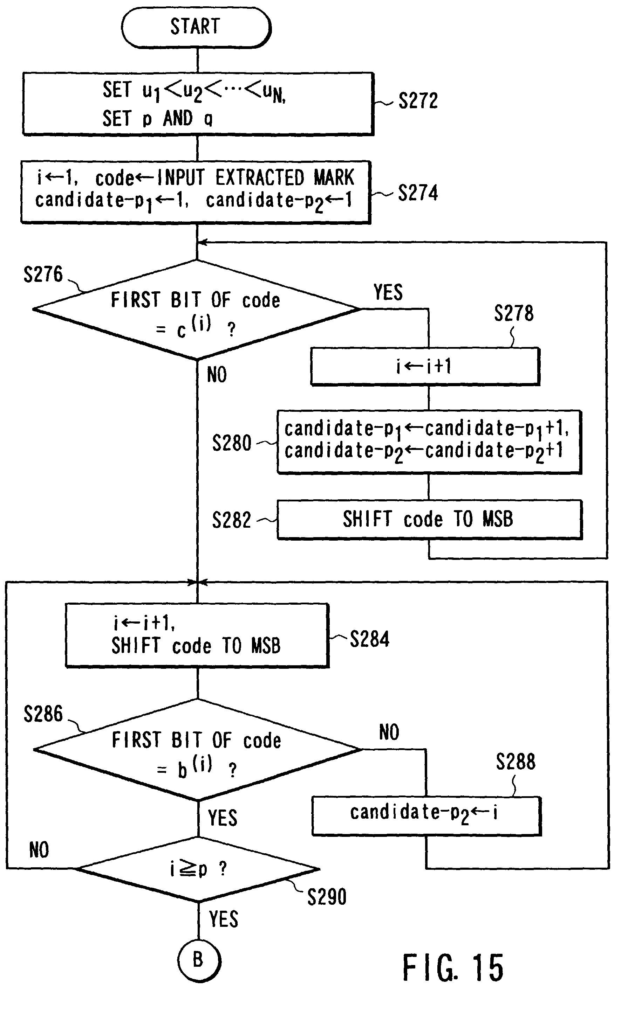

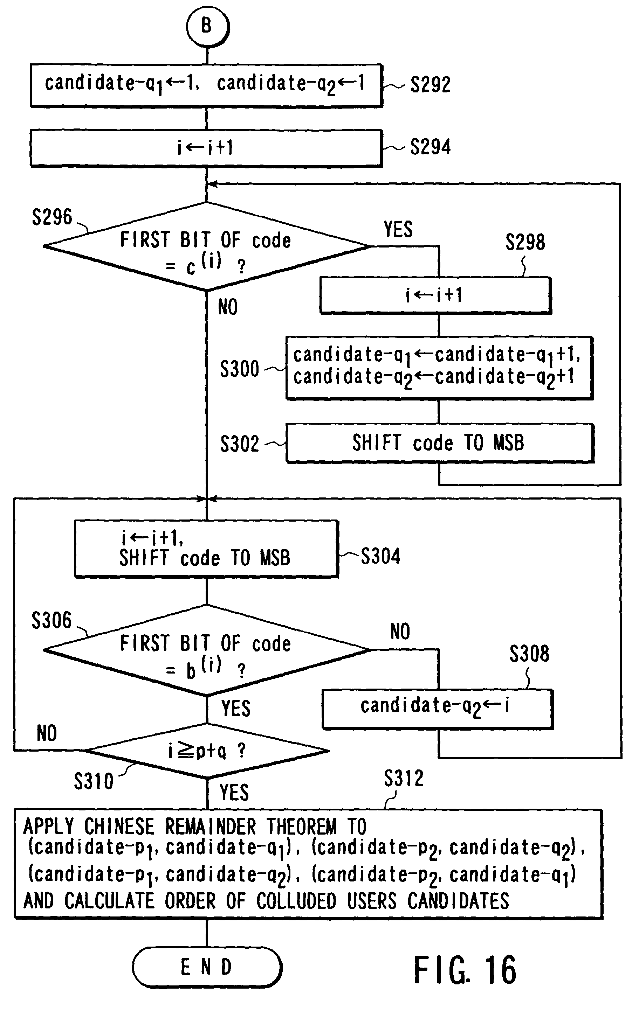

As the algorithm of the ID mark decoder 48 of the fourth embodiment, the algorithm of the third embodiment shown in FIG. 12 is executed for each of the numbers p and q. This algorithm is shown in FIGS. 15 and 16. In step S272, the same order as in embedding is set for the identification objects (users) u₁, u₂, ..., u_{N} (u₁, u₂, ..., u_{N}), and simultaneously, the same numbers p and q as in embedding are given. In step S274, 1 is set as a variable i, the input extracted mark is set as the initial value of "code", 1 is set for "candidate-p1" as the first colluder candidate, and 1 is set for "candidate-p2" as the second colluder candidate. In step S276, it is determined whether the first bit of "code" is c⁽ⁱ⁾. If YES in step S276, the variable i is incremented by one (+1) in step S278, and in step S280, "candidate-p1" as the first colluder candidate and "candidate-p2" as the second colluder candidate are incremented by one (+1). In step S282, "code" is shifted to the MSB by the length of c⁽ⁱ⁾, and the flow returns to step S276 to determine the first bit of "code". If NO in step S276, the variable i is incremented by one (+1), and "code" is shifted to the MSB by the length of c(i), and in step S286, it is determined whether the first bit of "code" is b⁽ⁱ⁾. If NO in step S286, i is set for "candidate-p2" as the second colluder candidate in step S288, and the flow returns to step S284. If YES in step S286, it is determined in step S290 whether the variable i is larger than p.

If NO in step S290, the flow returns to step S284. If YES in step S290, 1 is set for "candidate-q1" as the first colluder candidate, and 1 is set for "candidate-q2" as the second colluder candidate in step S292. in step S294, the variable i is incremented by one (+1). In step S296, it is determined whether the first bit of "code" is c(i). If YES in step S296, the variable i is incremented by one in step S298. In step S300, "candidate-q1" as the first colluder candidate and "candidate-q2" as the second colluder candidate are incremented by one (+1). In step S302, "code" is shifted to the MSB by the length of c(i), and the flow returns to step S296 to determine the first bit of "code". If NO in step S296, the variable i is incremented by one (+1), and "code" is shifted to the MSB by the length of c⁽ⁱ⁾ in step S304. In step S306, it is determined whether the first bit of "code" is b⁽ⁱ⁾. If NO in step S306, i is set for "candidate-q2" as the second colluder candidate in step S308, and the flow returns to step S304. If YES in step S306, it is determined in step S310 whether the variable i is larger than p + q. If NO in step S310, the flow returns to step S304. If YES in step S310, in step S312, the Chinese remainder theorem is applied to (candidate-p1, candidate-q1), (candidate-p2, candidate-q2), (candidate-p1, candidate-q2), and (candidate-p2, candidate-q1) to calculate and determine the order n of the candidates of colluding users.

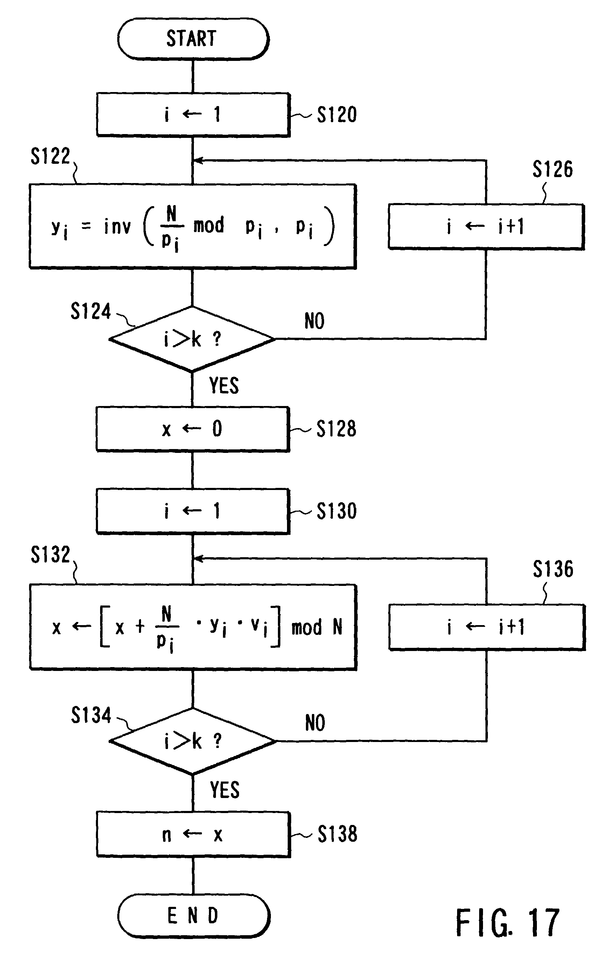

In the above-described fourth embodiment, the combination of two numbers p and q is used. However, according to the Chinese remainder theorem, k numbers p₁, p₂, ..., pₖ may be used. FIG. 17 shows an algorithm for obtaining n from vᵢ assuming that vᵢ = N mod pᵢ.

In step S210, 1 is set as the variable i. In step S122, yᵢ = inv ((N/pᵢ) mod Pᵢ, Pᵢ) is obtained. In step S124, it is determined whether the variable i is larger than k. If NO in step S124, the variable i is incremented by one in step S126, and step S122 is executed again. If YES in step S124, the initial value of 0 is set for x. In step S130, 0 is set as the variable i again. In step S132, x = x (x + (N/pᵢ)· yᵢ · vᵢ) mod N is calculated. In step S134, it is determined whether the variable i is larger than k. If NO in step S134, the variable i is incremented by one in step S136, and step S132 is executed again. If YES in step S134, x is output as information for specifying a user.

The present invention is not limited to the above-described embodiments, and various changes and modifications can be made. For example, in the above embodiments, the ID mark is generated and embedded into digital data on the side of the provider who distributes the digital data. However, generation and embedding of the ID mark may be separated. More specifically, the ID mark may be generated by a reliable third party and distributed to the digital data provider as a client. The provider directly embeds the distributed ID mark.

In this case, the ID mark can be used for a purpose other than an electronic watermark. For example, the ID mark can be transmitted/received as part of a message such that the user can perceive the presence of the ID mark but does not know the meaning of the mark. The ID mark can also be used for a purpose other than user name identification. The ID mark can also be used to identify the date and time of use, the user terminal, the digital data, or the digital data transfer path, or describe a use condition.

As has been described above, according to the present invention, in the electronic watermark processing apparatus for embedding and hiding watermark associated with a user of digital data in the data, even when a plurality of users collude to compare their data, the watermark can hardly be altered to watermark associated with another user.

## Claims

1. An electronic watermark processing apparatus for embedding information for identifying a user into digital data to be distributed to the user without making the information perceptible to the user, characterized in that information representing whether the user is included in arbitrary two of all users who may receive the digital data is used as the information for identifying the user.

2. An electronic watermark processing apparatus for embedding information for identifying a user into digital data to be distributed to the user without making the information perceptible to the user, characterized in that information representing whether the user is one of users who may receive the digital data is used as the information for identifying the user.

3. An electronic watermark processing apparatus for embedding information for identifying a user into digital data to be distributed to the user without making the information perceptible to the user, characterized in that an order is set for users who may receive the digital data, and information representing whether an ordinal number of the user is smaller than, equal to, or larger than that of one of the users is used as the information for identifying the user.

4. An electronic watermark processing apparatus for embedding information for identifying a user into digital data to be distributed to the user without making the information perceptible to the user, characterized in that an order is set for users who may receive the digital data, and letting N be the total number of users who may receive the digital data, relatively prime numbers p and q for satisfying N ≦ p × q are obtained, and information representing whether a remainder of an order n of the user to modulus p is smaller than, equal to, or larger than each of 0 to p-1 and information representing whether a remainder of the order n of the user to modulus q is smaller than, equal to, or larger than each of 0 to q-1 are used as the information for identifying the user.

5. An identification information generation apparatus for generating identification information to be added to digital data to be distributed to a user without making the information perceptible to the user, characterized in that information representing whether an object to be identified is included in arbitrary two of all identification objects is generated as the information for identifying the object.

6. An identification information generation apparatus for generating identification information to be added to digital data to be distributed to a user without making the information perceptible to the user, characterized in that information representing whether an object to be identified is one of all identification objects is generated as the information for identifying the object.

7. An identification information generation apparatus for generating identification information to be added to digital data to be distributed to a user without making the information perceptible to the user, characterized in that an order is set for identification objects, and information representing whether an ordinal number of an object to be identified is smaller than, equal to, or larger than that of one of the identification objects is generated as the information for identifying the object.

8. An apparatus according to claim 7, characterized in that letting N be the total number of users who may receive the digital data, relatively prime numbers p and q for satisfying N ≦ p × q are obtained, and information representing whether a remainder of an order n of the user to modulus p is smaller than, equal to, or larger than each of 0 to p-1 and information representing whether a remainder of the order n of the user to modulus q is smaller than, equal to, or larger than each of 0 to q-1 are used as the information for identifying the user.

9. An ID mark processing apparatus characterized by comprising:
a syntax analyzer (10) for syntax-analyzing digital data and outputting information associated with a token representing a certain meaning of a set of data;
a data transformation assignor (14) storing various data transformation contents, said data transformation assignor outputting the data transformation contents corresponding to the token;
means (16) for generating an ID mark in accordance with information unique to an identification object; and
ID mark embedding means (12) for changing a predetermined portion of the digital data in accordance with the ID mark and the data transformation contents output from said data transformation assignor.

10. An ID mark processing apparatus characterized by comprising:
a syntax analyzer (12) for syntax-analyzing digital data and outputting information associated with a token representing a certain meaning of a set of data;
a data transformation assignor (14) storing various data transformation contents together with a cost representing the degree of change in data by data transformation, said data transformation assignor outputting the data transformation contents corresponding to the token;
means (20) for accumulating the degree of change in data after transformation;
means (16) for generating an ID mark in accordance with information unique to an identification object;
ID mark embedding means (12) for changing a predetermined portion of the digital data in accordance with the ID mark and the data transformation contents output from said data transformation assignor; and
means (24) for inhibiting an operation of said ID mark embedding means when an accumulation value of the degree of change in data, which is accumulated in said accumulation means, exceeds a predetermined value.

11. An identification information detection apparatus for reading identification information from digital data in which the identification information is embedded without making the information perceptible to a user, the apparatus characterized by comprising:
means (44) for extracting an ID mark embedded at a predetermined position of the digital data; and
means (46) for decoding the extracted ID mark to obtain the identification information.

12. An identification information reading method of reading identification information for identifying a user from digital data in which the information is embedded by an electronic watermark processing apparatus for embedding information for identifying a user into digital data to be distributed to the user without making the information perceptible to the user and wherein information representing whether the user is included in arbitrary two of all users who may receive the digital data is used as the information for identifying the user, the method characterized by comprising the steps of:
reading a portion corresponding to each user pair from the identification information extracted from the digital data; and
determining whether the portion has a mark embedded by said electronic watermark processing apparatus and representing that the user pair includes a user corresponding to the digital data, or another mark,
wherein a user pair for which it is determined that the portion has the mark embedded by said electronic watermark processing apparatus and representing that the user pair includes the user corresponding to the digital data is estimated as a candidate pair of colluding users.

13. An identification information reading method of reading identification information for identifying a user from digital data in which the information is embedded by an electronic watermark processing apparatus for embedding information for identifying a user into digital data to be distributed to the user without making the information perceptible to the user, wherein information representing whether the user is one of users who may receive the digital data is used as the information for identifying the user, the method characterized by comprising:
reading a portion corresponding to each user from the identification information extracted from the digital data; and
determining whether the portion has a mark embedded by said electronic watermark processing apparatus and representing that the user is a user corresponding to the digital data, or another mark,
wherein a user for which it is determined that the portion has the mark embedded by said electronic watermark processing apparatus and representing that the user is the user corresponding to the digital data is estimated as a candidate of a colluding user.

14. An identification information reading method of reading identification information for identifying a user from digital data in which the information is embedded by an electronic watermark processing apparatus for embedding information for identifying a user into digital data to be distributed to the user without making the information perceptible to the user, wherein an order is set for users who may receive the digital data, and information representing whether an ordinal number of the user is smaller than, equal to, or larger than that of one of the users is used as the information for identifying the user, the method characterized by comprising the steps of:
1) sequentially reading a portion corresponding to each user from the identification information extracted from the digital data;
2) determining whether the portion has a mark embedded by said electronic watermark processing apparatus and representing that an ordinal number of the user is smaller than that of a user corresponding to the digital data or another data, and repeating the steps 1) and 2) until another mark is detected;
3) sequentially reading a portion corresponding to each user from a portion next to another mark which has been detected for the first time in the step 2);
4) determining whether the portion has a mark embedded by said electronic watermark processing apparatus and representing that the ordinal number of the user is larger than that of the user corresponding to the digital data or another data, and repeating the steps 3) and 4) until another mark is detected; and
5) repeating the steps 3), 4), and 5) until a final bit of the extracted identification information is reached,
wherein the step 2) comprises estimating, as a first colluding user candidate, the user corresponding to the portion having another mark detected for the first time, and
the step 4) comprises estimating, as a second colluding user candidate, the user corresponding to the portion having another mark finally detected.

15. An identification information reading method of reading identification information for identifying a user from digital data in which the information is embedded by an electronic watermark processing apparatus for embedding information for identifying a user into digital data to be distributed to the user without making the information perceptible to the user, wherein an order is set for users who may receive the digital data, and letting N be the total number of users who may receive the digital data, relatively prime numbers p and q for satisfying N ≦ p × q are obtained, and information representing whether a remainder of an order n of the user to modulus p is smaller than, equal to, or larger than each of 0 to p-1 and information representing whether a remainder of the order n of the user to modulus q is smaller than, equal to, or larger than each of 0 to q-1 are used as the information for identifying the user, the method characterized by comprising the steps of:
1) sequentially reading a portion corresponding to each user to modulus p from the identification information extracted from the digital data;
2) determining whether the portion has a mark embedded by said electronic watermark processing apparatus and representing that a remainder of an order of the user to modulus p is smaller than a remainder of an order of a user corresponding to the digital data to modulus p or another mark, and repeating the steps 1) and 2) until another mark is detected;
3) sequentially reading a portion corresponding to the remainder of the order of each user to modulus p from a portion next to another mark which has been detected for the first time in the step 2);
4) determining whether the portion has a mark embedded by said electronic watermark processing apparatus and representing that the remainder of the order of the user to modulus p is larger than the remainder of the order of the user corresponding to the digital data to modulus p or another mark, and repeating the steps 3) and 4) until another mark is detected;
5) repeating the steps 3), 4), and 5) until all portions of orders of users to modulus p are read from the extracted identification information;
6) after all portions of the remainders of the orders of the users to modulus p are read from the extracted identification information in the step 5), sequentially reading, from the next portion, a portion corresponding to the remainder of the order of each user to modulus q;
7) determining whether the portion has a mark embedded by said electronic watermark processing apparatus and representing that a remainder of the order of the user to modulus q is smaller than the remainder of the order of the user corresponding to the digital data to modulus q or another mark, and repeating the steps 6) and 7) until another mark is detected;
8) sequentially reading a portion corresponding to the remainder of the order of each user to modulus q from a portion next to another mark which has been detected for the first time in the step 7);
9) determining whether the portion has a mark embedded by said electronic watermark processing apparatus and representing that the remainder of the order of the user to modulus q is larger than the remainder of the order of the user corresponding to the digital data to modulus q or another mark, and repeating the steps 8) and 9) until another mark is detected; and
10) repeating the steps 8), 9), and 10) until all portions of orders of the users to modulus q are read from the extracted identification information,
wherein a Chinese remainder theorem is applied to a set of the remainder of the order of the user to modulus p corresponding to the portion having another mark detected for the first time in the step 2), the remainder of the order of the user to modulus p corresponding to the portion having another mark finally detected in the step 4), the remainder of the order of the user to modulus q corresponding to the portion having another mark detected for the first time in the step 7), and the remainder of the order of the user to modulus q corresponding to the portion having another mark finally detected in the step 9), thereby estimating a candidate of a colluding user.
